# EUROPEAN PATENT APPLICATION

(11) **EP 4 534 383 A1**
(43) Date of publication of application: **09.04.2025**
(21) Application number: 23811891.3
(22) Date of filing: 25.05.2023
(51) Int. Cl.: B62B 3/00, B62B 3/04, B62B 5/00, B62B 5/04, B01D 46/00

(54) **FILTER DEVICE, TRANSPORTATION VEHICLE, AND PAINTING DEVICE**

(30) Priority: 27.05.2022 JP 2022086918
(71) Applicant: TOYOTA JIDOSHA KABUSHIKI KAISHA, Toyota-shi Aichi 471-8571 (JP); TAIKISHA LTD., Tokyo 160-6129 (JP)
(72) Inventor: KOBAYASHI, Motoya, Toyota-shi Aichi 471-8571 (JP); ISHIDA, Kozo, Tokyo 160-6129 (JP)
(74) Representative: LBP Lemcke, Brommer & Partner Patentanwälte mbB
(86) International application number: PCT/JP2023/019562
(87) International publication number: WO 2023/229019

(57) **Abstract**

A filter apparatus 1 comprises: a housing 4 configured to accommodate a filter element 2 and having: an opening section 41 for entry and exit of the filter element 2 into and out of the housing 4; and a door 42 capable of closing the opening section 41; a receiver plate 3 on which the filter element 2 is placeable; and a restriction member disposed between the filter element 2 and the door 42 and configured to restrict movement of at least one of the filter element 2 and the receiver plate 3, in a state where the receiver plate 3 on which the filter element 2 is placed thereon is accommodated in the housing 4.

## Description

### BACKGROUND OF THE INVENTION

### Field of the Invention

The present invention relates to a filter apparatus, a transport cart, and a painting apparatus.

### Description of the Related Art

Filter apparatuses that use disposable filter elements are commonly used in paint factories and the like. US 2021/0260614 A1 discloses a paint mist removal apparatus that facilitates filter change work. US 2016/0288036 A1 discloses a filtration facility capable of accommodating a plurality of filter elements.

The filter apparatuses described in US 2021/0260614 A1 and US 2016/0288036 A1 are based on the premise that the filter elements are disposable. Thus, these filter apparatuses each have an opening section for entry and exit of the filter element into and out of the apparatuses, and a door for closing the opening while the filter apparatuses are in operation. Conventionally, there have been cases where the door is deformed as a result of being pushed from the inside by the filter element, resulting in incomplete closing of the opening section. If the closing of the opening section is incomplete, there is a concern of issues such as leakage of exhaust gas containing paint mist and a decrease in the air flow volume of an exhaust system where the filter element is disposed.

### SUMMARY OF THE INVENTION

The present invention has been made in view of the foregoing problem, and aims to provide a painting apparatus with a filter apparatus in which a door keeps an opening section closed.

A filter apparatus according to the present invention is characterized in that: the apparatus comprises a housing configured to accommodate a filter element, the housing having: an opening section for entry and exit of the filter element into and out of the housing; and a door capable of closing the opening section; a receiver plate on which the filter element is placeable; and a restriction member disposed between the filter element and the door and configured to restrict movement of at least one of the filter element and the receiver plate, in a state where the receiver plate on which the filter element is placed is accommodated in the housing.

According to this configuration, the filter element is unlikely to push open the door and form a gap. Thus, the opening section is easily kept closed by the door while the filter apparatus is in operation.

Further features and advantages of the present invention will be more apparent through the description of the following illustrative and non-limiting embodiments with reference to the drawings.

### BRIEF DESCRIPTION OF THE DRAWINGS

FIG. 1 is a schematic view of a painting apparatus according to an embodiment.
FIG. 2 is a perspective view of a filter apparatus according to the embodiment.
FIG. 3 is a perspective view of the filter apparatus according to the embodiment.
FIG. 4 is an enlarged view of a IV area of FIG. 3 (in an unrestricted state).
FIG. 5 is an enlarged view of the IV area of FIG. 3 (in a restricted state).
FIG. 6 is an enlarged view of a VI area of FIG. 3 (in an unrestricted state).
FIG. 7 is an enlarged view of the VI area of FIG. 3 (in a restricted state).
FIG. 8 is a perspective view of a transport cart for the filter apparatus according to the embodiment.
FIG. 9 is a perspective view of the transport cart for the filter apparatus according to the embodiment.
FIG. 10 shows implementation of work to install a filter element in the filter apparatus according to the embodiment.
FIG. 11 shows implementation of work to install the filter element in the filter apparatus according to the embodiment.
FIG. 12 is an enlarged view of a XII area of FIG. 11.
FIG. 13 shows a variation of a receiver plate.

### DESCRIPTION OF THE EMBODIMENT

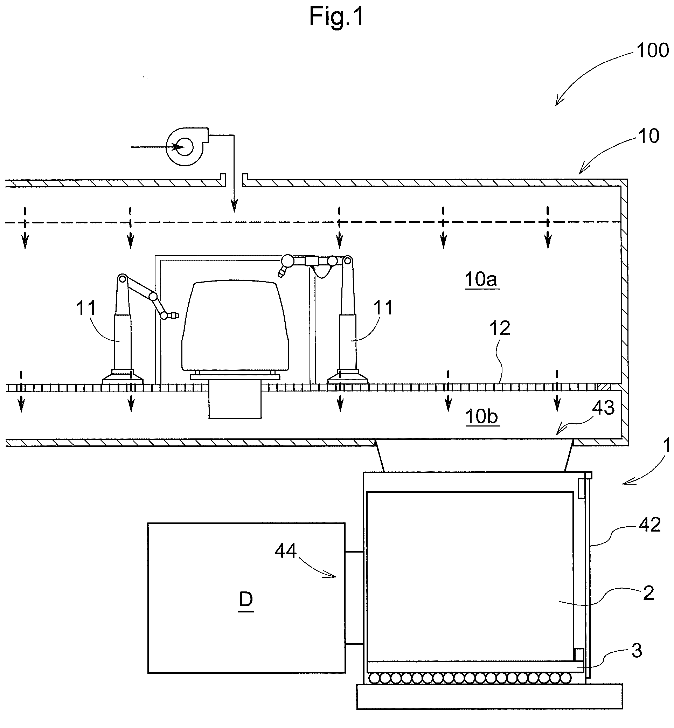

An embodiment of a filter apparatus, a transport cart, a painting apparatus, and a method for installing a filter element according to the present invention will be described with reference to the drawings. The following is a description of an example where the filter apparatus according to the present invention is applied to a filter apparatus 1 (FIG. 1) installed under the floor of a painting booth 10 in a painting apparatus 100.

### Configuration of painting apparatus

The painting apparatus 100 according to this embodiment includes a painting booth 10 and a filter apparatus 1 (FIG. 1). The painting booth 10 has an upper tank 10a disposed above a grating floor 12 where a painting device 11 performs painting work, and a lower tank 10b disposed below the grating floor 12 and connected to the filter apparatus 1. A downward airflow moving downward from above is formed in the painting booth 10, and air containing paint that was not adhered to an object to be painted is guided from the upper tank 10a to the lower tank 10b.

The filter apparatus 1 is installed below the painting booth 10, with a painting booth connection port 43 connected to the lower tank 10b of the painting booth 10, and an exhaust duct connection port 44 connected to an exhaust duct D.

### Configuration of filter apparatus

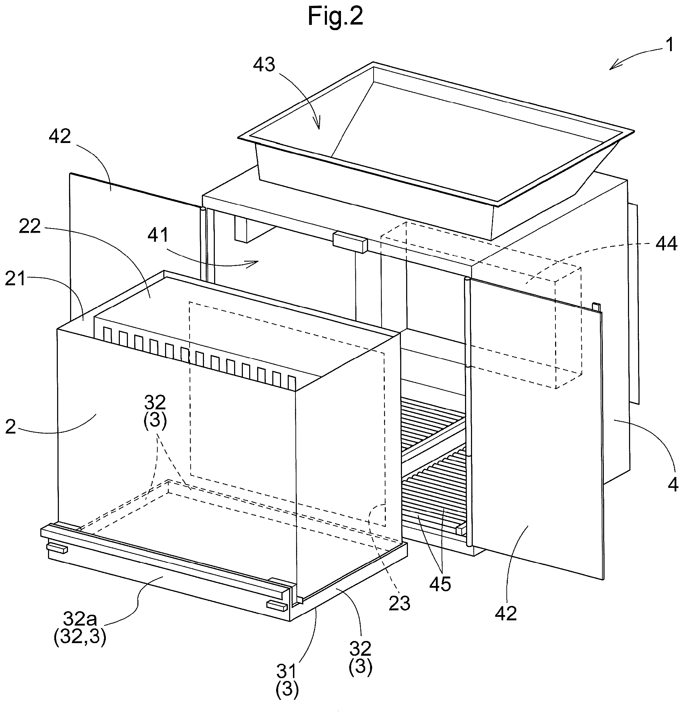

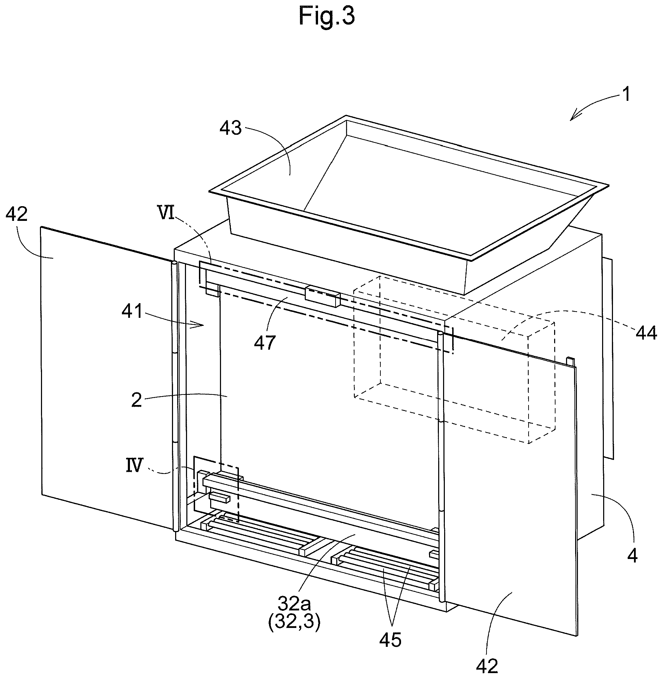

The filter apparatus 1 according to this embodiment includes a receiver plate 3 on which a filter element 2 is placed, and a housing 4 that accommodates the filter element 2 and the receiver plate 3. FIG. 2 shows the filter element 2 and the receiver plate 3 placed outside of the housing 4. FIG. 3 shows the filter element 2 and the receiver plate 3 accommodated in the housing 4.

### Filter element

The filter element 2 is a so-called cardboard filter and has a filter inlet 21, a filter section 22, and a filter outlet 23. When exhaust gas containing the paint mist is introduced from the filter inlet 21, the paint mist is collected at the filter section 22, and exhaust gas with a reduced paint mist content is discharged from the filter outlet 23. The filter element 2 in this embodiment is rectangular in a plan view.

### Receiver plate

The receiver plate 3 has a placement surface 31 serving as a surface on which the filter element 2 is placed, and wall members 32 extending upward from an edge of the placement surface 31. The placement surface 31 in this embodiment is also rectangular in a plan view in correspondence with the filter element 2 being rectangular in a plan view. The wall members 32 are provided at positions corresponding to respective sides of the rectangle of the placement surface 31, and serve to restrict movement of the filter element 2. Of these, a wall member 32a, which is disposed on the proximal side in FIG. 3 (on the opening section 41 side) while the receiver plate 3 is accommodated in the housing 4, has a contact piece 33 and a lever 34, which will be described later.

### Housing

The housing 4 has an opening section 41, doors 42, the painting booth connection port 43, the exhaust duct connection port 44, and floor rollers 45, and is shaped such that two connecting members that function as the painting booth connection port 43 and the exhaust duct connection port 44 are connected to a substantially rectangular-parallelepiped body section. The opening section 41 is provided in one face of this rectangular parallelepiped and has a shape and dimensions that allow the filter element 2 placed on the receiver plate 3 to be taken in and out. The doors 42 are double swing doors, and the opening section 41 can be closed by closing the doors 42.

The painting booth connection port 43 is connected to the painting booth 10 and functions as an inlet for letting exhaust gas containing the paint mist into the housing 4. The exhaust duct connection port 44 is connected to the exhaust duct D and functions as an outlet for discharging exhaust gas with a reduced content of the paint mist from the housing 4. With the filter element 2 accommodated in the housing 4, the filter inlet 21 and the painting booth connection port 43 are aligned, and the filter outlet 23 and the exhaust duct connection port 44 are aligned.

The floor rollers 45 are provided on the floor inside the housing 4. The floor rollers 45 have a so-called roller conveyor structure and allow the filter element 2 and the receiver plate 3 to move back and forth in the housing 4. Providing the floor rollers 45 allows the filter element 2 and the receiver plate 3 to smoothly move horizontally when taken in and out.

In the following description, based on a flow line of the filter element 2 entering the housing 4 from the opening section 41, the side on which the opening section 41 and the doors 42 are provided is referred to as a "proximal side", and the side on which the exhaust duct connection port 44 is provided is referred to as a "distal side".

The housing 4 includes a contact member 46 serving as a first restriction member (restriction member capable of coming into contact with the receiver plate 3) capable of restricting movement of the receiver plate 3 while the receiver plate 3 with the filter element 2 placed thereon is accommodated in the housing 4, and a stopper member 47 serving as a second restriction member (restriction member capable of coming into contact with the filter element 2) capable of restricting movement of the filter element 2. For both restriction members to exhibit the above effects, the filter element 2 and the receiver plate 3 are required to be accommodated at a predetermined position in the housing 4. The predetermined position may be, for example, a position when the filter element 2 and the receiver plate 3 have been pushed to the most distal part of the housing 4. Both restriction members are provided between the filter element 2 and the doors 42 while the filter element 2 and the receiver plate 3 are accommodated at the predetermined position in the housing 4.

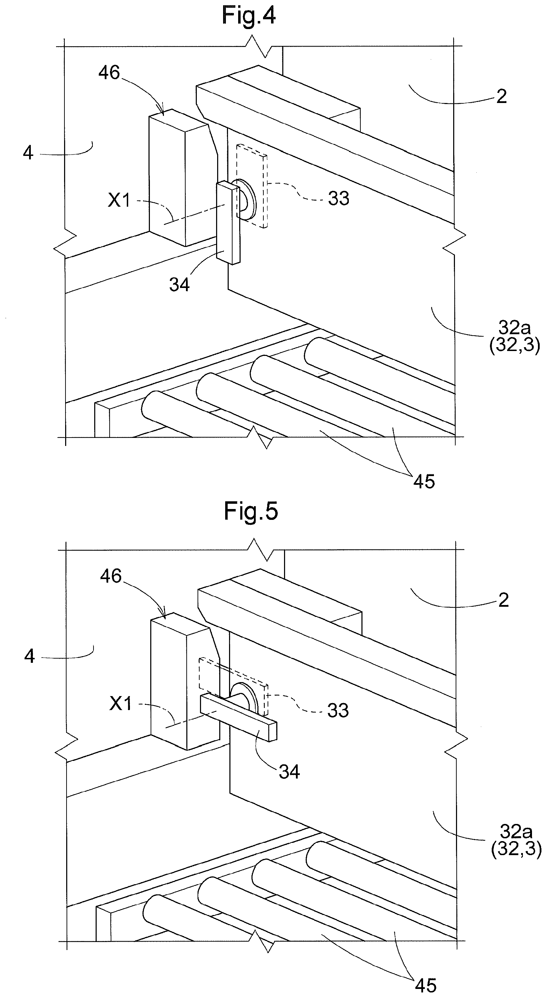

The contact member 46 is provided at a position and with dimensions that enable the contact piece 33 at an end portion of the receiver plate 3 (wall member 32a at the proximal side) to come into contact with the contact member 46 (FIGS. 4 and 5). FIG. 4 shows a state where the restriction by the contact member 46 is canceled, and FIG. 5 shows a state where the restriction is placed by the contact member 46. The contact piece 33 is held so as to be able to pivot approximately 90° about an axis X1 by operating the lever 34. To let the receiver plate 3 into the housing 4 from the opening section 41, the lever 34 is operated such that the contact piece 33 is located above the rotation axis as shown in FIG. 4 (retreat position). The contact piece 33 in this state does not come into contact with the contact member 46, thereby allowing the receiver plate 3 to enter the housing 4 from the opening section 41. After the receiver plate 3 has entered, the lever 34 is operated such that the contact piece 33 is located on the left side of the rotation axis, as shown in FIG. 5, thus enabling the contact piece 33 to come into contact with the back side of the contact member 46. In this state, movement of the receiver plate 3 to the proximal side is restricted, and as a result, movement of the filter element 2 placed on the receiver plate 3 is also restricted. Note that one contact piece 33 and one lever 34 are provided at each end of the wall member 32a, and one contact member 46 that comes into contact therewith is provided on each of the left and right sides of the receiver plate 3 as viewed from the front.

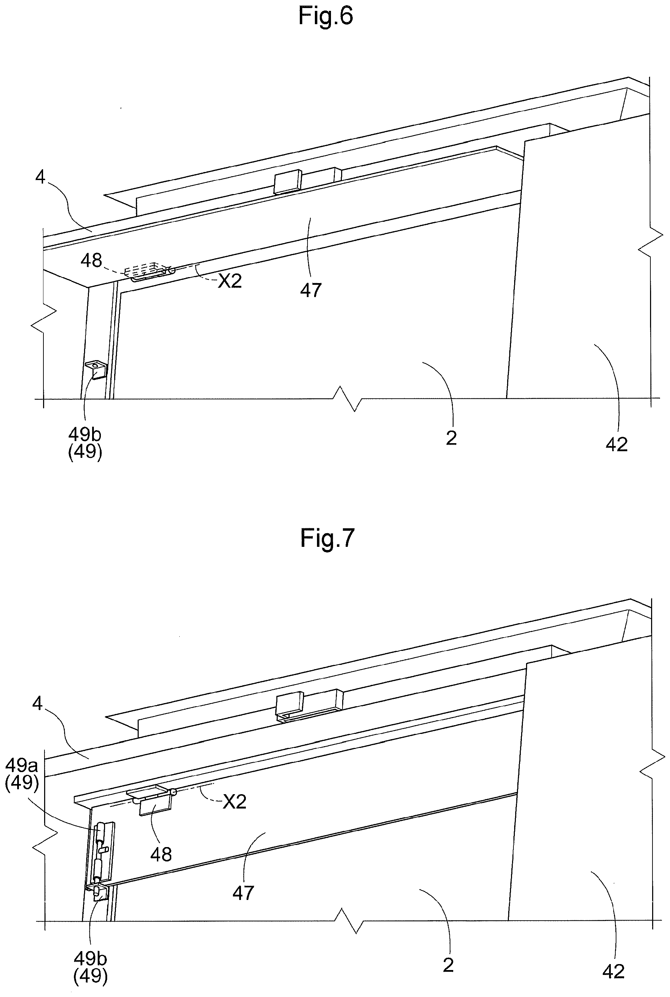

The stopper member 47 is held on a top face of the housing 4 by a hinge 48 and can pivot approximately 90° about an axis X2 (FIGS. 6 and 7). FIG. 6 shows a state where the restriction by the stopper member 47 is canceled, and FIG. 7 shows a state where the restriction is placed by the stopper member 47. When letting the filter element 2 into the housing 4 from the opening section 41, the stopper member 47 is rotated (retreated) upward to the state shown in FIG. 6. In this state, the stopper member 47 does not come into contact with the upper portion of the filter element 2, thus enabling the filter element 2 to enter the inside of the housing 4 from the opening section 41. By causing the stopper member 47 to extend downward from the top face of the housing 4 (FIG. 7) after letting the filter element 2 in, the upper portion of the filter element 2 and the stopper member 47 are allowed to come into contact with each other, and movement of the filter element 2 to the proximal side is restricted. Note that a magnet (not shown) is attached to the stopper member 47, and the magnetic force of the magnet allows the stopper member 47 to be fixed along the top face of the housing 4 (retreat position). Also, a pair of a surface bolt 49a and a metal receiver 49b is provided as a fixing member 49 for fixing the stopper member 47. One hinge 48 and one fixing member 49 (one pair) are provided on each of the left and right sides of the stopper member 47 as viewed from the front.

As described above, in the filter apparatus 1 according to this embodiment, movement of the filter element 2 to the proximal side is restricted by contact between the filter element 2 and the wall member 32a, contact between the contact piece 33 and the contact member 46 (contact between the receiver 3 and the contact member 46), and contact between the filter element 2 and the stopper member 47. With this, the filter element 2 is prevented, in a multiple manner, from moving toward the opening section 41 within the housing 4, and the filter element 2 and the doors 42 are kept separated from each other. If the filter element 2 hits the doors 42, there is a possible problem that the doors 42 pushed by the filter element 2 are deformed and a gap occurs between the doors 42 and the opening section 41, resulting in leakage of exhaust gas containing the paint mist and a decrease in air flow volume in the housing 4. However, in the filter apparatus 1 according to this embodiment, movement of the filter element 2 to the proximal side is restricted, so that the opening section 41 is kept closed by the doors 42, and such problem does not occur.

### Transport cart

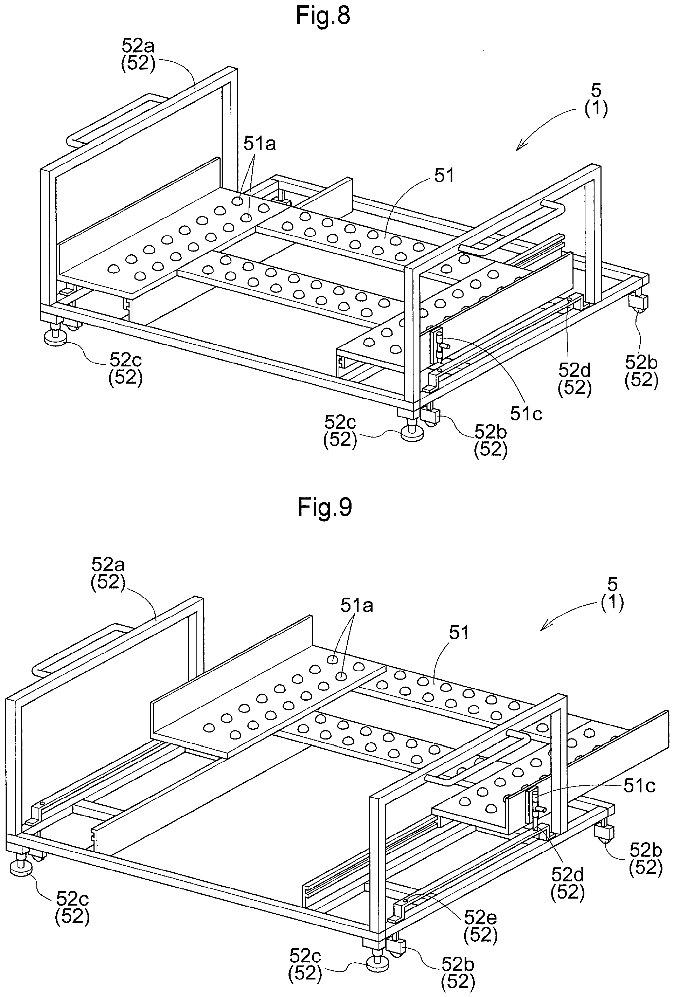

Next, an embodiment of the transport cart 5 to be used to transport the filter element 2 is described. The transport cart 5 according to this embodiment has a loading surface member 51 and a carriage 52 (FIGS. 8 and 9). The filter element 2 and the receiver plate 3 can be easily transported by placing the filter element 2 before or after use on the receiver plate 3 and further placing this receiver plate 3 on the transport cart 5.

The loading surface member 51 is a plate-shaped member on which the filter element 2 can be loaded. More specifically, the receiver plate 3 and the filter element 2 placed on the receiver plate 3 can be integrally loaded on the loading surface member 51. A plurality of ball bearings 51a (each of which is an example of a rotation member) are provided on a top face of the loading surface member 51.

The carriage 52 supports the loading surface member 51 and can travel on the floor. Specifically, the carriage 52 has a frame-shaped body section 52a, casters 52b attached to legs of the body section 52a, and brakes 52c (each of which is an example of a travel restriction member) capable of restricting travel of the carriage 52.

The loading surface member 51 is slidably supported by the body section 52a. The frame of the body section 52a is not provided on the front and back sides in the sliding direction of the body section 52a such that the loading surface member 51, when sliding, can move out of the frame of the body section 52a. Thus, the transport cart 5 can change to a plurality of states including a first state (FIG. 8), in which the loading surface member 51 is located within the frame of the carriage 52, and a second state (FIG. 9), in which a portion of the loading surface member 51 is located out of the frame of the carriage 52.

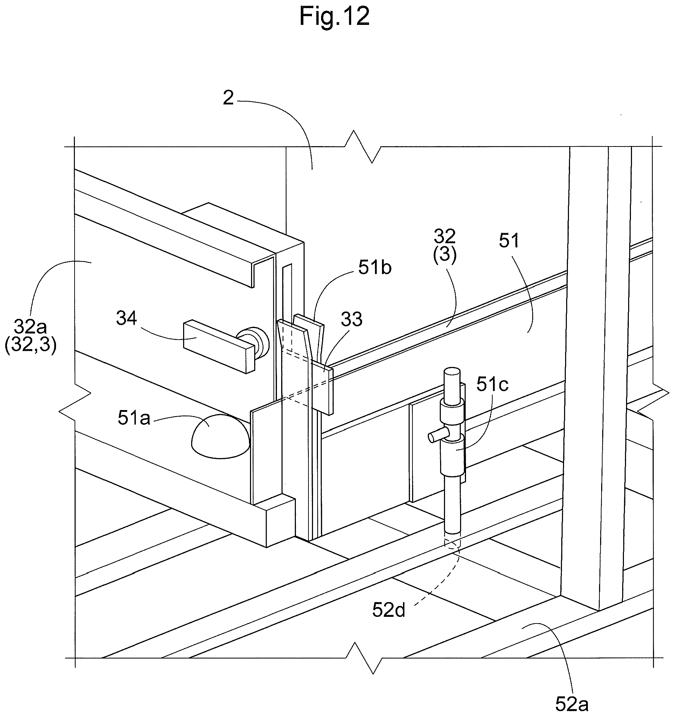

The loading surface member 51 includes an engagement groove 51b (FIG. 12). The engagement groove 51b is provided at a position and with dimensions that makes it possible to accommodate the aforementioned contact piece 33, and can fix the relative positions of the receiver plate 3 and the loading surface member 51 by engaging the contact piece 33 with the engagement groove 51b.

In addition, a surface bolt 51c is provided on the loading surface member 51, and a receiving hole 52d is provided in the carriage 52 (body section 52a) (FIG. 12), in a positional relationship that allows the surface bolt 51c to be fitted into the receiving hole 52d in the second state (FIG. 9). The transport cart 5 can be maintained in the second state by fitting the surface bolt 51c into the receiving hole 52d with the loading surface member 51 located at an end of the slidable area. Note that a receiving hole 52e is also provided at a position at which the surface bolt 51c can be fitted thereinto while the transport cart 5 is in the first state (FIG. 8), and the transport cart 5 can thus be maintained in the first state.

Note that other constituent elements of the transport cart 5 will be described together with the method for installing the filter element 2.

### Method for installing filter element

Next, an embodiment of a method for installing the filter element 2 is described. The installation method according to this embodiment includes a process (hereinafter, "first process") of placing, in the housing 4, the receiver plate 3 with the filter element 2 placed thereon, and a process (hereinafter, "second process") of restricting movement of the filter element 2 and the receiver plate 3.

### First process

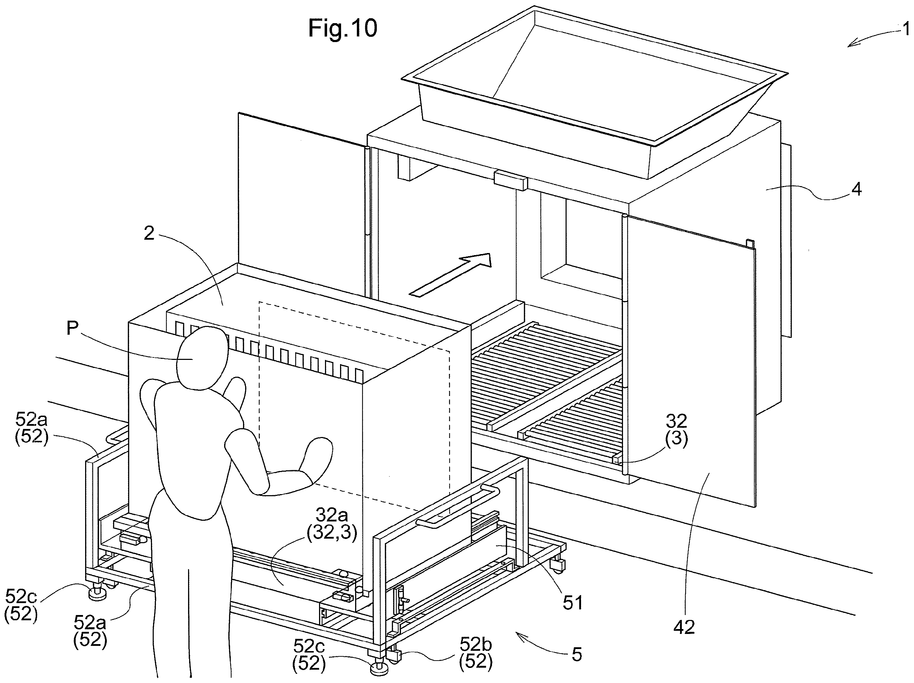

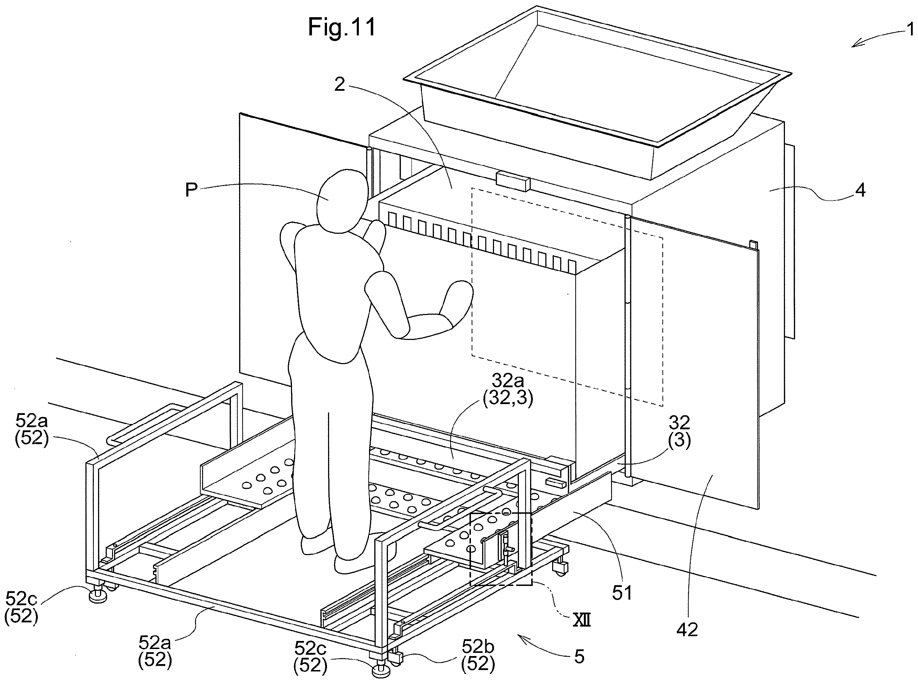

FIGS. 10 and 11 show a mode of installing a new filter element 2 in the housing 4 with use of the transport cart 5. First, the transport cart 5 with the filter element 2 and the receiver plate 3 loaded thereon is stopped in front of the housing 4 in which the filter element 2 is not accommodated. At this time, the transport cart 5 is in the first state (FIG. 8). Next, the doors 42 are opened, and the stopper member 47 is fixed so as to conform to the top face of the housing 4 (retreat position) (FIG. 6). At this time, it is preferable to provide a mark as a reference for alignment on the floor in front of the housing 4 such that the filter element 2 and the receiver plate 3 can be easily aligned with the front face of the opening section 41. It is also preferable to provide a slope (not shown) for guiding the receiver plate 3 to the opening section 41, in front of the housing 4. If a slope is provided, the caster 52b on the side where the loading surface member 51 protrudes is supported by the slope, and the transport cart 5 can thus be prevented from tilting with the loading surface member 51 slid outward of the carriage 52.

Next, an operation to slide the loading surface member 51 and push the filter element 2 and the receiver plate 3 into the housing 4 is performed (FIG. 11). More specifically, the transport cart 5 is changed from the first state (FIG. 8) to the second state (FIG. 9) (the loading surface member 51 is slid). Then, a first push operation to integrally move the filter element 2, the receiver plate 3, and the loading surface member 51, and a second push operation to move the filter element 2 and the receiver plate 3 relative to the loading surface member 51 and push the filter element 2 and the receiver plate 3 into the housing 4 with the transport cart 5 in the second state, are implemented in this order. At this time, the brake 52c is enabled in order to restrict unexpected travel of the carriage 52.

Further, since the body section 52a has a frame shape, a user P can enter the inside of the frame of the body section 52a and perform work, making it easy to implement the work of pushing the filter element 2 and the receiver plate 3 into the housing 4. In this series of work, there have been cases where it is difficult for a worker to push the filter element 2 and the receiver plate 3, and the workability is felt to be poor in the case of using a conventional transport cart in which the surface for loading the filter element and the receiver plate does not slide. The workability is improved by using the transport cart 5 according to this embodiment. In addition, the plurality of ball bearings 51a are provided in the top face of the loading surface member 51, and the receiver plate 3 is supported by the ball bearings 51a, thus allowing the filter element 2 and the receiver plate 3 to move smoothly.

It is desirable to avoid unexpected movement of the filter element 2 and the receiver plate 3 while the transport cart 5 with the filter element 2 and the receiver plate 3 loaded thereon travels to transport the filter element 2 and the receiver plate 3, and while the transport cart 5 is placed on an elevator or the like and moved in a vertical direction in the middle of its transport route, for example. For this purpose, the transport cart 5 is maintained in the first state by fitting the surface bolt 51c into the receiving hole 52e before the first push operation is performed. Further, the relative positions of the receiver plate 3 and the loading surface member 51 are fixed by engaging the engagement groove 51b of the loading surface member 51 with the contact piece 33 of the receiver plate 3 before the second push operation is performed. This prevents the receiver plate 3 from falling while the transport cart 5 is traveling, for example.

Based on the functions of the above members, the operation to push the filter element 2 and the receiver plate 3 into the housing 4 is performed in the following procedure. Note that the stopper member 47 is fixed so as to conform to the top face of the housing 4 (retreat position) (FIG. 6) and fixed in this state in advance, as mentioned above. First, the surface bolt 51c is lifted up to cancel the fitting to the receiving hole 52e, and thereafter, the loading surface member 51 is slid to change the transport cart 5 from the first state to the second state. After sliding the loading surface member 51 to the end of the sliding range, the surface bolt 51c is fitted into the receiving hole 52d to maintain the transport cart 5 in the second state. Next, the contact piece 33 is placed above the rotation axis (retreat position) (FIG. 4) by operating the lever 34 to cancel the engagement with the engagement groove 51b, and thereafter, the filter element 2 and the receiver plate 3 are pushed into the housing 4. It is checked that the contact piece 33 is at the retreat position, and the filter element 2 and the receiver plate 3 are further pushed in. After pushing the filter element 2 and the receiver plate 3 further until the contact piece 33 is located on the distal side of the contact member 46, the lever 34 is operated such that the contact piece 33 is located at a restriction position at which the contact piece 33 faces laterally relative to the rotation axis (FIG. 5 shows the contact piece located on the left side).

The new filter element 2 transported with use of the transport cart 5 is placed into the housing 4 together with the receiver plate 3 by the two-step push operations, as described above.

### Second process

In the second process, the contact piece 33 and the contact member 46 are brought into contact to restrict movement of the receiver plate 3 to the proximal side (FIG. 5). Also, the stopper member 47 is changed from the retreat position, at which the stopper member 47 is located along the top face of the housing 4, to a downward-extending state to restrict movement of the filter element 2 to the proximal side (FIG. 7). Thereafter, the doors 42 are closed, and installation of the filter element 2 is complete.

### Removal of filter element

To remove the filter element 2 after use from the housing 4, the above operations for installing the filter element 2 need only be performed in reverse order. First, the doors 42 are opened, and the restriction on the filter element 2 and the receiver plate 3 placed by the first and second restriction members is canceled (reverse procedure of the second process).

Next, the filter element 2 and the receiver plate 3 are withdrawn from the housing 4 and loaded on the loading surface member 51 (reverse procedure of the second step of the push operation). At this time, work efficiency is improved if the filter element 2 and the receiver plate 3 are withdrawn from the housing 4 with use of a rod-shaped member having a hook at a tip. At this time, fitting the surface bolt 51c into the receiving hole 52d to set the transport cart 5 to the second state can prevent the loading surface member 51 from moving to the proximal side while withdrawing the filter element 2 and the receiver plate 3 to the proximal side, thereby further improving workability. After placing the filter element 2 and the receiver plate 3 on the loading surface member 51, the contact piece 33 and the engagement groove 51b are engaged with each other.

Further, the surface bolt 51c is lifted up to cancel the fitting to the receiving hole 52d, and thereafter, the loading surface member 51 is slid, and the filter element 2, the receiver plate 3, and the loading surface member 51 are integrally moved to set the transport cart 5 to the first state (reverse procedure of the first step of the push operation). The filter element 2 after use can be loaded on the transport cart 5 by the above procedure. Note that it is favorable to fit the surface bolt 51c into the receiving hole 52e to maintain the transport cart 5 in the first state before the transport cart 5 travels.

### Other Embodiments

Lastly, other embodiments of the present invention are described. Note that the configuration disclosed in each of the following embodiments can also be combined with the configurations disclosed in the other embodiments as long as no contradiction arises.

In the above embodiment, a configuration in which the filter element 2 is a cardboard filter has been described as an example. However, the filter element of the filter apparatus according to the present invention may have any shape, and may be made of any material.

In the above embodiment, a configuration in which the doors 42 of the housing 4 are double swing doors has been described as an example. However, the type of door of the filter apparatus according to the present invention is not limited. Accordingly, a single swing door may alternatively be employed. Instead of a swing door(s), a sliding door(s), a folding door(s), an accordion door(s), a shutter, or the like may also be employed.

In the above embodiment, a description has been given, as an example, of a configuration in which the painting booth connection port 43 is provided at an upper portion of the housing 4 and the exhaust duct connection port 44 is provided in a face opposing the doors 42. However, in the filter apparatus according to the present invention, the filter inlet 21 and the filter outlet 23 may be arranged in any manner.

In the above embodiment, a description has been given, as an example, of a configuration in which the contact member 46 serving as a restriction member capable of restricting movement of the receiver plate 3, and the stopper member 47 serving as a restriction member capable of restricting movement of the filter element 2, are provided. However, in the filter apparatus according to the present invention, a restriction member capable of restricting movement of at least either the filter element or the receiver plate need only be provided in the housing, and it is not necessary to be capable of restricting movement of both the filter element and the receiver plate. However, it is advantageous that movement of both the filter element and the receiver plate can be restricted, in terms of keeping the opening section 41 closed by the doors 42.

In the above embodiment, a configuration in which the contact member 46 capable of coming into contact with the receiver plate 3 is provided has been described as an example. However, if the filter apparatus according to the present invention has a restriction member capable of coming into contact with the receiver plate, the contact may be implemented in any mode. For example, a configuration may be employed in which the housing and the receiver plate have a fitting protrusion and a fitting recess that can fit into each other, and the fitting is completed to restrict movement of the receiver plate in response to the receiver plate being placed at a predetermined position.

In the above embodiment, a configuration in which the stopper member 47 is held by the top face of the housing 4 has been described as an example. However, if the filter apparatus according to the present invention has a restriction member capable of coming into contact with the filter element, the restriction member may be disposed in any manner. For example, the restriction member may be provided on a side face of the housing.

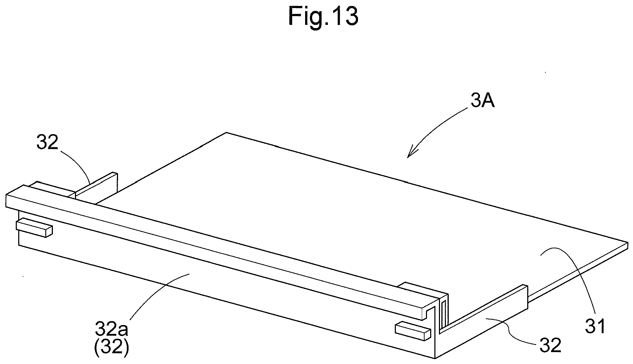

In the above embodiment, a configuration in which the wall members 32 are provided at positions corresponding to respective sides of the rectangle of the placement surface 31 has been described as an example. However, if the receiver plate of the filter apparatus according to the present invention has wall members, the arrangement thereof is not limited. For example, a receiver plate 3A according to a variation shown in FIG. 13 has wall members 32 at positions corresponding to three sides of the rectangle of the placement surface 31. In this variation, when placing the filter element 2 on the receiver plate 3A, the filter element 2 can be placed on the receiver plate 3A without lifting the filter element 2 higher than the wall member 32 by causing the filter element 2 to pass through an area where the wall members 32 are not provided. Note that a wall member 32 may be provided on only a portion of one side of the placement surface 31, as shown in FIG. 13.

In the above embodiment, the filter apparatus 1 that includes the transport cart 5 has been described as an example. However, provision of the transport cart is optional in the filter apparatus according to the present invention.

In the above embodiment, a configuration in which the loading surface member 51 is slidably supported by the body section 52a has been described as an example. However, if the filter apparatus according to the present invention includes a transport cart, the loading surface member may be fixed to the carriage.

In the above embodiment, a configuration in which a plurality of ball bearings 51a are provided in the top face of the loading surface member 51 has been described as an example. However, if the filter apparatus according to the present invention includes a transport cart, provision of a rotation member in the top face of the loading surface member 51 is optional. If a rotation member is provided, the rotation member is not limited to a ball bearing, and may alternatively be a roller or the like, for example.

In the above embodiment, a configuration in which the engagement groove 51b of the loading surface member 51 can engage with the contact piece 33 of the receiver plate 3 has been described as an example. However, if the filter apparatus according to the present invention includes a transport cart, the loading surface member may be, but need not necessarily be, engageable with the receiver plate.

In the above embodiment, a configuration in which the carriage 52 includes the brake 52c has been described as an example. However, if the filter apparatus according to the present invention includes a transport cart, provision of a brake is optional.

As for any other configurations as well, the embodiments disclosed herein are examples in all respects, and it should be understood that the scope of the present invention is not limited thereby. A person skilled in the art would readily understand that the embodiments can be altered as appropriate without departing from the gist of the present invention. Accordingly, other embodiments that are altered without departing from the gist of the present invention are naturally included in the scope of the present invention.

## Claims

1. A filter apparatus comprising:
a housing configured to accommodate a filter element and having an opening section for entry and exit of the filter element into and out of the housing and a door capable of closing the opening section;
a receiver plate on which the filter element is placeable; and
a restriction member disposed between the filter element and the door and configured to restrict movement of at least one of the filter element and the receiver plate, in a state where the receiver plate on which the filter element is placed is accommodated in the housing.

2. The filter apparatus according to claim 1,
wherein the restriction member is capable of coming into contact with the receiver plate accommodated in the housing.

3. The filter apparatus according to claim 2,
wherein the restriction member includes a contact member provided for the housing and a contact piece provided for the receiver plate.

4. The filter apparatus according to claim 1,
wherein the restriction member is a stopper member held by a top face of the housing, and
the stopper member is switchable between (i) a state where the stopper member extends downward from the top face of the housing and is capable of coming into contact with the filter element and (ii) a state where the stopper member extends along the top face of the housing and does not come into contact with the filter element.

5. A transport cart configured to transport the filter element to be used in the filter apparatus according to any one of claims 1 to 4, the transport cart comprising:
a loading surface member on which the filter element is loadable; and
a carriage capable of supporting the loading surface member and traveling.

6. The transport cart according to claim 5,
wherein the loading surface member is slidable relative to the carriage.

7. The transport cart according to claim 5, further comprising:
a rotation member disposed on a top face of the loading surface member.

8. The transport cart according to claim 5,
wherein the loading surface member and the receiver plate are engageable with each other.

9. The transport cart according to claim 5, further comprising:
a travel restriction member configured to restrict travel of the carriage.

10. A painting apparatus comprising:
a painting booth for a painting operation; and
a filter apparatus configured to receive air from the painting booth,
the filter apparatus including:
a receiver plate on which a filter element is placeable, the receiver plate having: an opening section for entry and exit of the filter element into and out of the filter apparatus; and a doorcapable of closing the opening section; and
a restriction member disposed between the filter element and the door and configured to restrict movement of at least one of the filter element and the receiver plate, in a state where the receiver plate on which the filter element is placed is accommodated in the housing.
